# EUROPEAN PATENT APPLICATION

(11) **EP 4 760 826 A1**
(43) Date of publication of application: **17.06.2026**
(21) Application number: 25221910.0
(22) Date of filing: 09.12.2025
(51) Int. Cl.: H01M 8/0232, H01M 8/1213, H01M 8/1226, H01M 8/2432, H01M 8/2483, H01M 8/2484

(54) **AN ELECTROCHEMICAL ASSEMBLY**

(30) Priority: 12.12.2024 US 202418978373
(71) Applicant: Aerospace Carbon Solutions LLC, Evendale, OH 45215 (US)
(72) Inventor: LIU, Mingfei, Evendale, 45215 (US)
(74) Representative: Openshaw & Co.

(57) **Abstract**

Systems and methods for manufacturing a large-sized electrochemical assembly (200) are described herein. In some approaches, the electrochemical assembly (200) comprises a first gas manifold plate (202), a second gas manifold plate (206) and a plurality of electrochemical cell repeating unit (210) disposed between the first gas manifold plate (202) and the second gas manifold plate (206). Each electrochemical cell repeating unit (210) includes a large-size metal sheet substrate (220) with isolated smaller size porous metal structures (224) on the large-size metal sheet substrate (220). An anode layer (116A), an electrolyte layer (116B) and a cathode layer (116C) are fabricated on the large-size metal substrate (220) using thin film deposition technology. The electrochemical assembly (200) comprises a flow field design including a plurality of risers (232) of the electrochemical each large-size metal sheet substrate (220) and interconnect (222) of each electrochemical cell repeating unit to uniformly distribute a first feed stream (236) and a second feed stream (238) to each electrochemical cell repeating unit (210).

## Description

### TECHNICAL FIELD

These teachings relate generally to an electrochemical device and more particularly to an improved substrate for an electrochemical unit.

### BACKGROUND

Chemical manufacturing commonly involves energy-intensive and/or resource-intensive processes. In one approach, an electrochemical device may be used to produce hydrogen (H₂), carbon monoxide (CO), or synthesis gas ("syngas") which is a combination of carbon monoxide and hydrogen. Such electrochemical devices are commonly formed from a number of individual electrochemical unit cells stacked or bundled together. The size and number of individual electrochemical unit cells in the electrochemical device may contribute to the chemical conversion and energy efficiency of the device. However, these electrochemical unit cells can be expensive to manufacture and may not scale well for larger systems. Therefore, developing cost-efficient, large-scale electrochemical unit cells and electrochemical devices may be desirable.

### BRIEF DESCRIPTION OF DRAWINGS

Various needs are at least partially met through provision of the electrochemical unit described in the following detailed description, particularly when studied in conjunction with the drawings. A full and enabling disclosure of the aspects of the present description, including the best mode thereof, directed to one of ordinary skill in the art, is set forth in the specification, which refers to the appended figures, in which:
FIG. 1 is a schematic diagram of an electrochemical cell unit in accordance with various embodiments;
FIG. 2 is a schematic diagram of an electrochemical assembly in accordance with various embodiments;
FIG. 3 is a schematic diagram of a gas manifold plate in accordance with various embodiments;
FIG. 4 is a schematic diagram of an interconnect in accordance with various embodiments;
FIG. 5A is a sectional view taken along line I of FIG. 2; and
FIG. 5B is a section view taken along line II of FIG. 2.

Elements in the figures are illustrated for simplicity and clarity and have not necessarily been drawn to scale. For example, the dimensions and/or relative positioning of some of the elements in the figures may be exaggerated relative to other elements to help to improve understanding of various embodiments of the present teachings. Also, common but wellunderstood elements that are useful or necessary in a commercially feasible embodiment are often not depicted in order to facilitate a less obstructed view of these various embodiments of the present teachings. Certain actions and/or steps may be described or depicted in a particular order of occurrence while those skilled in the art will understand that such specificity with respect to sequence is not actually required.

### DETAILED DESCRIPTION

The system for an electrochemical assembly and an electrochemical cell unit described herein provide a large size electrochemical cell unit and assembly to scale up the effective cell area on a single cell basis. The electrochemical cell unit includes a large-sized substrate including a plurality of porous regions. A plurality of riser holes are formed around an outer perimeter of the substrate. The plurality of riser holes includes at least two inlet riser holes to introduce a first feed stream and a second feed stream and at least two outlet riser holes to exhaust the first feed stream and the second feed stream. A plurality of sub cells are disposed on the substrate such that the plurality of sub cells covers the plurality of porous regions. Each sub cell of the plurality of sub cells includes an anode layer, a cathode layer, and an electrolyte layer disposed between the anode layer and cathode layer. An interconnect is connected to the substrate. The interconnect includes a plurality of flow channels fluidly connected to the substrate and a plurality of riser holes formed around an outer perimeter of the interconnect. The plurality of riser holes include at least two inlet riser holes and at least two outlet riser holes.

The approaches described herein involve a large-sized metal substrate to increase the active area and ratio of active surface area to volume . The anode layer, electrolyte layer, and cathode layer of the plurality of sub cells are directly fabricated on the large-sized metal substrate through thin film deposition technology.

Traditional approaches often rely on high temperature sintering to manufacture large size designs. Through such approaches, however, the high temperature sintering often creates several challenges including lower strength, increased density of flaws and higher thermal stresses. These challenges may impact the quality, structural integrity, and reliability of the electrochemical cell unit and electrochemical cell assembly.

As compared to traditional approaches, the approaches described herein fabricate the anode layer, electrolyte layer, and cathode layer directly on the large-sized metal substrate using thin film deposition technologies, without requiring high temperature sintering. Advantageously, the approaches described herein provide precise microstructure control to reduce the thermal stresses on the plurality of sub cells. Moreover, the thin film deposition technologies fabricate the plurality of sub cells directly on the substrate, thereby forming an integrated seal and improving the fuel electrode electrical contact.

Further, the approaches described herein involve a plurality of risers formed in the plurality of electrochemical cell repeating units of the electrochemical assembly to uniformly distribute a first feed stream and a second feed stream throughout the electrochemical cell assembly such that the first feed stream and the second feed stream are flowed through each flow field of each of the plurality of electrochemical cell repeating units. In such approaches described herein, the series of flow fields of the plurality of electrochemical cells provide for integrated recirculation with the first feed stream and the second feed stream exiting one flow field and being recirculated through the same flow field or entering another flow field of one of the plurality of electrochemical cell repeating units disposed upstream or downstream thereof. By recirculating the first feed stream and the second feed stream, the feed utilization may be increased and the temperature gradient within the electrochemical cell assembly may be reduced. The integrated recirculation may remove by-product heat formed during the electrochemical reactions and may reduce temperature gradients, which in turn minimizes thermal stresses and enhances the structural integrity and reliability of the electrochemical assembly.

It is contemplated that the electrochemical cell and electrochemical assembly described herein can be used in numerous applications. That is, the electrochemical cell and electrochemical assembly may be used in an electrolysis operation for various applications including for power-to-liquid sustainable aviation fuel (SAF) production, chemical production, and conventional oil refining operations, and in a fuel cell operation for electricity generation. During electrolysis operation, the electrochemical cell and electrochemical device described herein utilize electrical energy to facilitate electrochemical reactions to produce hydrogen (H₂), carbon monoxide (CO), or syngas. Alternatively, when operating as a fuel cell, the electrochemical cell and electrochemical device described herein convert chemical energy from a fuel source, such as hydrogen, into electrical energy through electrochemical reactions.

As used herein, an electrochemical cell refers to any device that generates electrical energy from chemical reactions or uses electrical energy to drive chemical reactions. The electrochemical cell may operate in either electrolysis mode or fuel cell mode.

As used herein, the term "axially" and/or "axial" refers to directions and orientations that extend substantially parallel to a centerline of the electrochemical cell assembly.

The terms and expressions used herein have the ordinary technical meaning as is accorded to such terms and expressions by persons skilled in the technical field as set forth above except where different specific meanings have otherwise been set forth herein. The word "or" when used herein shall be interpreted as having a disjunctive construction rather than a conjunctive construction unless otherwise specifically indicated. The terms "coupled," "fixed," "attached to," and the like refer to both direct coupling, fixing, or attaching, as well as indirect coupling, fixing, or attaching through one or more intermediate components or features, unless otherwise specified herein.

The singular forms "a", "an", and "the" include plural references unless the context clearly dictates otherwise.

Approximating language, as used herein throughout the specification and claims, is applied to modify any quantitative representation that could permissibly vary without resulting in a change in the basic function to which it is related. Accordingly, a value modified by a term or terms such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 10 percent margin.

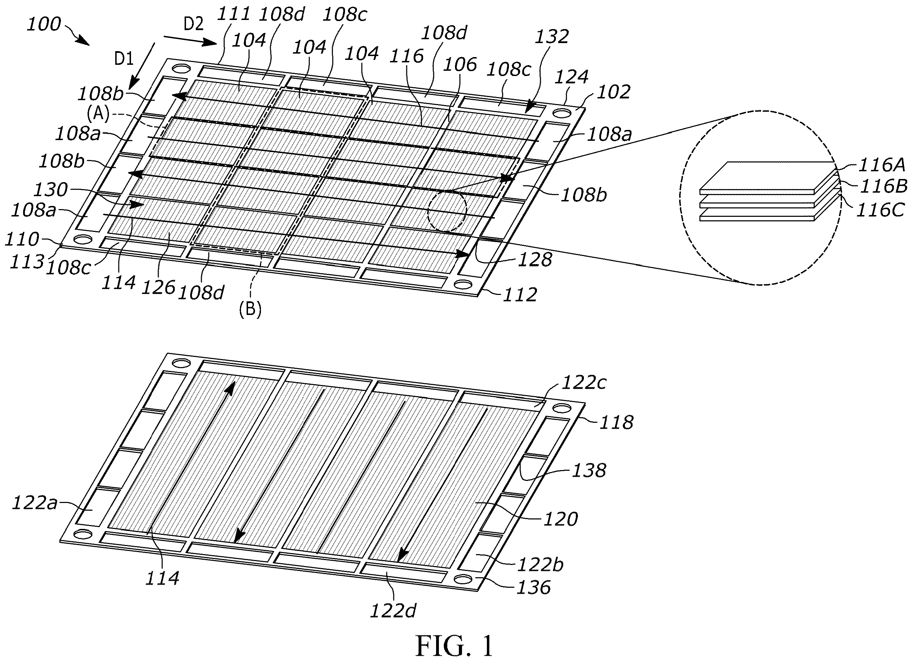

Referring now to the figures, FIG. 1 illustrates an exploded view of an electrochemical cell unit 100. The electrochemical cell unit 100 is a repeating electrochemical cell unit capable of being stacked together to form an electrochemical assembly capable of producing, for example, sustainable aviation fuel (SAF) through power-to-liquid processes, or generating electricity. The electrochemical assembly may be operated as a solid oxide fuel cell (SOFC), solid oxide electrolysis cell (SOEC) or a solid oxide co-electrolysis cell (SOCC).

The electrochemical cell unit 100 includes a substrate 102 with a plurality of porous regions 104 and an interconnect 118 connected to the substrate 102. The plurality of porous regions 104 are formed on the substrate 102. The plurality of porous regions 104 are separated and surrounded by non-porous regions 106 to form multi-isolated smaller size porous regions. A plurality of sub cells 116 including thin layers of anode 116A, electrolyte 116B, cathode 116C are fabricated on the porous regions 104 on top of the substrate 102.

The substrate 102 includes a large-size metal sheet substrate. The substrate 102 may have an area in the range of about 100 cm² to 2000 cm². In some examples, the substrate 102 may have an area in the range of about 100 cm² to 1000 cm². In some other examples, the substrate 102 may have an area greater than 1000 cm². In yet another example, the substrate 102 may have an area greater than 3000cm². The large area of the substrate 102 increases the effective cell area of the individual electrochemical cell unit 100. Increasing the effective cell area allows for more active reaction sites and concurrent reactions, and, thus, increased total power output or electrochemical production (e.g., syngas production). The large area of the substrate 102 reduces the number of electrochemical cell units required to achieve the desired power levels and electrochemical production rates and reduces the manufacturing cost for large systems.

The substrate 102 may comprise any suitable metal. Suitable metals may, for example, include but are not limited to stainless steel alloys and nickel-based alloys. In some examples, the substrate may include a coated metallic material to enhance conductivity and corrosion resistance. In some examples, the substrate 102 may comprise a material capable of withstanding high temperatures, for example, in the range of about 400C to 1000C.

A plurality of riser holes 108a, 108b, 108c, 108d are formed in the substrate 102 to uniformly distribute a first feed stream 130 and a second feed stream 132 to the substrate 102. The plurality of riser holes 108a, 108b may be formed around an outer perimeter 124 of the substrate 102 on a first side 110 and a second side 112. However, it will further be appreciated that in certain embodiments, the plurality of riser holes 108a, 108b, 108c, 108d may be formed around the center of the substrate 102 or at other locations of the substrate 102. In some embodiments, the plurality of riser holes 108a, 108b, 108c, 108d may be formed around all four sides of the substrate 102.

The plurality of riser holes 108a, 108b, 108c, 108d includes one or more inlet riser holes 108a to introduce a first feed stream 130 to an top side 126 of the substrate 102 and one or more inlet riser holes 108C to introduce a second feed stream 132 to an underside 128 of the substrate 102 and one or more outlet riser holes 108b to exhaust a first exhaust stream (i.e., the reacted first feed stream 130) and/or a second exhaust stream (i.e., the reacted second feed stream 132) from the substrate 102. In some examples, the plurality of riser holes 108a, 108b, 108c, 108d may include two or more inlet riser holes 108a, 108c and two or more outlet riser holes 108b, 108d. In one example, the substrate 102 may include four inlet riser holes 108a, 108c and 4 outlet riser holes 108b, 108d. Particularly, as shown in FIG. 1, the first side 110 and the second side 112 of the substrate 102 each include two inlet riser holes 108a and two outlet riser holes 108b arranged in an alternating arrangement and the third side 111 and the fourth side 113 each include two inlet rise holes 108c and two outlet riser holes 108d. In some embodiments, the two inlet riser holes 108a, 108c may be disposed adjacent to each other and the two outlet riser holes 108b, 108d may be disposed adjacent to each other. Alternately, the first side 110 may include four inlet riser holes 108a and the second side 112 may include four outlet riser holes 108b and the third side 111 may include four inlet riser holes 108c and the fourth side 113 may include four outlet riser holes 108d.

In this manner, a plurality of flow fields 114 may extend axially across the substrate 102 in the second direction (D2) on the top side 126 of the substrate 102 and may extend axially across the substrate 102 in the first direction (D1) on the underside 128 of the substrate 102.

The plurality of sub cells 116 are fabricated on the substrate 102. Each sub cell of the plurality of sub cells 116 includes an anode layer 116A, a cathode layer 116C, and an electrolyte layer 116B disposed between the anode layer 116A and cathode layer 116B. The anode layer 116A, electrolyte layer 116B, and cathode layer 116C are fabricated on the substrate 102 by thin film deposition technology. Suitable thin film deposition technology may include, for example, but is not limited to thermal spray, sputtering, chemical vapor deposition, atomic layer deposition, or the like. Using such thin film deposition technologies may decrease the thermal stress on each sub cell of the plurality of sub cells 116 by matching the thermal and mechanical properties of the anode layer 116A, electrolyte layer 116B, and cathode layer 116C with the properties of the substrate 102. In other words, the thin film deposition technologies may improve the microstructure and reduce thermal stresses, mismatches and gradients for improved electrochemical activity and structural integrity. Additionally, the thin film deposition parameters are configurable to provide local flow-redistributing features around each sub cell to improve uniform distribution of reactants and heat.

As compared to traditional approaches including sintering, such thin film deposition technologies may be performed at lower temperatures to reduce the thermal gradients within the deposited cathode layer 116C, electrolyte layer 116B, and anode layer 116A, thereby minimizing the residual stress that may develop during cooling. Additionally, the thin film deposition technologies fabricate the plurality of sub cells 116 directly on the substrate 102, thereby forming an integrated seal.

The anode layer 116A, cathode layer 116C and electrolyte 116B may respectively comprise suitable materials based on the desired mechanical properties, electrochemical activity, and chemical stability. In some embodiments, the plurality of sub cells 116 comprise ceramic (e.g., the cathode 116C and electrolyte 116B) and cermet layers (e.g., the anode 116A). In one example, the cathode layer 116C may comprise lanthanum strontium manganite- yttria stabilized zirconia (LSM-YSZ), the electrolyte may comprise yttria stabilized zirconia (YSZ), and the anode layer may comprise nickel yttria stabilized zirconia (Ni-YSZ).

The plurality of sub cells 116 are fabricated on the substrate 102 to continuously or discontinuously cover the plurality of porous regions 104. As shown in FIG. 1, the electrochemical cell unit 100 includes 16 porous regions 104 with 16 sub cells 116 disposed thereon. In some embodiments, the plurality of sub cells 116 are fabricated on the substrate 102 continuously covering the 16 porous regions 104. More specifically, the anode layer 116A, electrolyte layer 116B, and cathode layer 116C are fabricated on the substrate 102 to continuously cover the porous regions 104 to form a single cell, isolated by the non-porous regions 106 to form 16 sub cells. In some embodiments, the anode layer 116A, electrolyte layer 116B, and the cathode layer 116C are fabricated on top of the plurality of porous regions 104, forming 16 disconnected cells with gaps or spaces between. It is to be understood that the configuration of the substrate 102 is one example and any number of the plurality of porous regions 104 and plurality of sub cells 116 may be used.

In some embodiments, the plurality of porous regions 104 may be formed in an array arrangement on the substrate 102. The plurality of porous regions 104 may be arranged with a plurality of rows (A) in a first direction (D1) and a plurality of columns (B) in a second direction (D2) orthogonal to the first direction (D1). Each row of the plurality of rows (A) of the plurality of porous regions 104 is disposed on the substrate 102 between a respective inlet riser hole 108a and an outlet riser hole 108b on the first side 110 and the second side 112 and each column of the plurality of columns (B) is disposed on the substrate 102 between a respective inlet riser hole 108c and an outlet riser hole 108b on the third side 111 and the fourth side 113. The number of inlet riser holes 108a and the number of outlet riser holes 108b on each of the first side 110 and the second side 112 is equal to the number of plurality of rows (A). Similarly, the number of inlet riser holes 108c and the number of outlet riser holes on each of the third side 111 and the fourth side 113 is equal to the number of plurality of columns (B).

The electrochemical cell unit 100 further includes an interconnect 118. The interconnect 118 is connected to and in electrical contact with the substrate 102. In the exemplary embodiment depicted in FIG. 1, a top side 136 of the interconnect 118 is connected to and in electrical connection with the underside 128 of the substrate 102. Additionally, or alternatively, an underside 138 of the interconnect 118 may be connected to and in electrical connection with the top side 126 of the substrate 102.

The interconnect 118 is the same or substantially the same size as the substrate 102 and may have an area in the range of about 100 cm² to 2000 cm². In some examples, the interconnect 118 may have an area in the range of about 100 cm² to 1000 cm². In some other examples, the interconnect 118 may have an area greater than 1000 cm². In yet another example, the interconnect 118 may have an area greater than 3000cm². As described above, the large area of the substrate 102 increases the effective cell area on the individual electrochemical cell unit 100, thereby increasing the number of active reaction sites and concurrent reactions. In this manner, the large area of the interconnect 118 facilitates the increased first feed stream 130 and second feed stream 132 flow rates across the active reaction sites to facilitate the concurrent reactions occurring on the substrate 102.

The interconnect 118 may comprise suitable materials based on the desired mechanical properties, electrical conductivity, thermal conductivity, and chemical stability. Suitable materials may include, but are not limited to, ceramics, metals, metallic alloys or combinations thereof.

A plurality of flow channels 120 are disposed on both the top side and the underside of the interconnect 118 and extend substantially across both sides of the interconnect 118. The plurality of flow channels 120 may extend in the second direction (D2) on an underside 138 of the interconnect 118 and the first direction (D1) perpendicular to the second direction on a top side 136 of the interconnect 118. In some examples, the plurality of flow channels 120 may extend in the first direction (D1) on an underside 138 of the interconnect 118 and the second direction (D2) perpendicular to the first direction on a top side 136 of the interconnect 118. The plurality of flow channels 120 may be parallel channels, parallel fins, curvilinear channers or other shapes to provide fluid flow and heat transfer uniformity. As will be appreciated, the plurality of flow channels 120 are in fluid communication with the plurality of sub cells 116 via the plurality of porous regions 104.

Referring still to FIG. 1, the interconnect 118 includes a plurality of riser holes 122a, 122b, 122c, 122d. The plurality of riser holes 122a, 122b, 122c, 122d are aligned with the plurality of riser holes 108a, 108b, 108c, 108d of the substrate 102 for facilitating the flow of the first feed stream 130 and the second feed stream 132 across the plurality of sub cells 116 of the substrate 102.

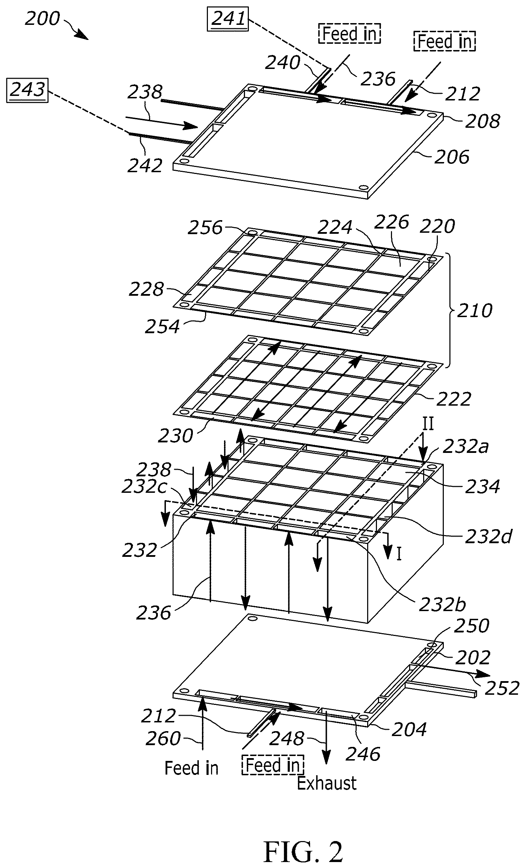

The plurality of riser holes 122a, 122b, 122c, 122d include at least one inlet riser hole 122c to facilitate the second feed stream 132 flow across the underside 128 of the substrate 102 and at least one inlet riser hole 122a to facilitate a first feed stream 130 flow across a top side 126 of an adjacently stacked, or neighboring substrate 102 such as substrate 234 as shown in FIG. 2. In addition, the plurality of riser holes 122a, 122b, 122c, 122d further includes at least one outlet riser hole 122b to exhaust a first exhaust steam (i.e., the reacted first feed stream 130) from the top side 126 of the adjacently stacked, or neighboring substrate 102 as shown in FIG. 2 and at least one outlet riser hole 122d to exhaust a second exhaust stream (i.e., the reacted second feed stream 132) from the underside 128 of the substrate 102.

Next referring to FIG. 2, an electrochemical assembly 200, which may also be referred to as an electrochemical stack, is shown. The electrochemical assembly 200 includes a first gas manifold plate 202 at a first end 204 and a second gas manifold plate 206 at a second end 208. A plurality of electrochemical cell repeating units 210 are disposed between the first and second gas manifold plate 202, 206. The plurality of electrochemical cell repeating units 210 may be the same as the electrochemical cell unit 100 described with reference to FIG. 1 above.

The electrochemical assembly 200 may be configured as, for example, a 50-kilowatt (kW) assembly, with each one of the electrochemical cell repeating units 210 producing approximately 1 volt (V). In another example, the electrochemical assembly 200 may be configured as a 100-kilowatt (kW) assembly. It is contemplated that any number of the plurality of electrochemical repeating units 210 may be included in the electrochemical assembly 200 based on the end use requirements.

The first gas manifold plate 202 and the second gas manifold plate 206 each include at least two ports 212. In one non-limiting embodiment, the second gas manifold plate 206 includes a first port 240 configured to introduce (e.g. sized and connected fluidly upstream the electrochemical assembly 200 and downstream a feed source 241) a first feed stream 236 (e.g., hydrogen, methane, carbon monoxide, or a mixture including one or more of these) used as the fuel and a second port 242 configured to introduce (e.g. sized and connected fluidly upstream the electrochemical assembly 200 and downstream a feed source 243) a second feed stream 238 (e.g., air) used to supply oxygen into the electrochemical assembly 200. Additionally, the first gas manifold plate 202 includes a first outlet port 246 is configured to remove (e.g., connected fluidly downstream the electrochemical assembly 200) a first product stream 248 (e.g., the reacted first feed stream 236) and a second outlet port 250 configured to remove (e.g., connected fluidly downstream the electrochemical assembly 200) a second product stream 252 (e.g., the reacted second feed stream 238) from the electrochemical assembly 200. Any number of ports 212 may be included in the first gas manifold plate 202 and the second gas manifold plate 206 depending on the requirements and operation of the electrochemical assembly 200. The first gas manifold plate 202 and/or second gas manifold plate 206 may include one or more additional ports configured to introduce an additional feed stream and/or remove a product stream. The additional ports allow for an increased feed stream concentration in the electrochemical assembly 200 and efficient product stream removal to reduce the product concentration, thereby improving the performance, electrochemical efficiency and energy efficiency.

The first feed stream 236 may comprise a liquid, a gas, or a combination thereof. In some examples, the first feed stream 236 may comprise at least one of steam (H₂O), carbon dioxide (CO₂), methane (CH₄), or a combination thereof. In some examples, the first feed stream 236 may comprise gaseous hydrogen gas containing reformate steam. In yet other examples, the first feed stream 236 may be selected based on the operation of the electrochemical assembly 200 including fuel cell operation for power generation or electrolysis operation for hydrogen (H2), carbon monoxide (CO), or syngas production.

The second feed stream 238 may comprise an oxidant present in a liquid, a gas, or a combination thereof. In some examples, the second feed stream 238 may comprise air, or molecular oxygen (O₂).

As shown in FIG. 2, the plurality of electrochemical cell repeating units 210 are disposed between the first gas manifold plate 202 and the second gas manifold plate 206. The plurality of electrochemical cell repeating units 210 are axially stacked and electrically connected in series. As will be more fully described below, the stacked arrangement may advantageously increase the electrochemical assembly 200 operating efficiency due to the high utilization of the fuel and reutilization of by-product heat from a downstream one of the plurality of electrochemical cell repeating units 210 which may be used to preheat the first feed stream 236 or second feed stream 238 flowing to a subsequent one of the plurality of electrochemical cell repeating units 210.

Each one of the plurality of electrochemical cell repeating units 210 comprises a substrate 220 and an interconnect 222. The substrate 220 includes a large-size metal sheet substrate with isolated smaller size porous metal structures 224. A plurality of sub cells 226 are fabricated on the large-size metal sheet substate 220 such that the plurality of sub cells 226 cover (e.g., continuously or discontinuously) the isolated smaller size porous metal structures 224. Each sub cell of the plurality of sub cells 226 includes an anode layer such as anode layer 116A, a cathode layer 116C and an electrolyte layer 116B disposed between the anode layer 116A and the cathode layer 116C as shown in FIG. 1.

Each one of the plurality of electrochemical cell repeating units 210 further includes a plurality of substrate riser holes 228 formed in the substrate 220 and a plurality of interconnect riser holes 230 formed in the interconnect 222. The plurality of riser holes 228, 230 respectively include at least two inlet riser holes and at least two outlet riser holes.

The plurality of substrate riser holes 228 formed in each substrate 220 of the plurality of electrochemical cell repeating units 210 are aligned with the plurality of interconnect riser holes 230 formed in each interconnect 222 of the plurality of electrochemical cell repeating units 210. Accordingly, a plurality of risers 232 are formed throughout the electrochemical assembly 200 between the first gas manifold plate 202 and second gas manifold plate 206. As shown in FIG. 2, the plurality of risers 232 is disposed around an outer perimeter of the electrochemical assembly 200. Risers 232 axially extend between and are in fluid communication with the first gas manifold plate 202 and the second gas manifold plate 206 to distribute the first feed stream 236 and the second feed stream 238 to the plurality of electrochemical cell repeating units 210.

However, it will further be appreciated that in certain embodiments, the plurality of substrate riser holes 228, and interconnect riser holes 230 may be disposed around the center of the substrate 220 and interconnect 222, or at various other locations. In such a manner, the plurality of risers 232 may be disposed in the electrochemical assembly 200 at a corresponding location.

During operation, in one exemplary embodiment, a first feed stream 236 is supplied to the electrochemical assembly 200 through a first inlet port 240 of the at least one port 212 on the first gas manifold plate 202 and/or second gas manifold plate 206 and is exhausted through a first outlet port 246 of the at least one port 212 on the first gas manifold plate 202 and/or second gas manifold plate 206. A second feed stream 238 is supplied to the electrochemical assembly 200 through a second inlet port 242 of the least one port 212 on the first gas manifold plate 202 and/or second gas manifold plate 206 and is exhausted through the second outlet port 250 of at least one port 212 on the first gas manifold plate 202 and/or second gas manifold plate 206.

The first and second inlet ports 240, 242 are fluidly connected to the plurality of risers 232. The first feed stream 236 flowing through the first inlet port 240 of the at least one port 212 flows through one or more of the plurality of risers 232 into a respective one of plurality of electrochemical cell repeating units 210. Additionally, the second feed stream 238 flowing through the second inlet port 242 of the at least one port 212 flows through one or more of the plurality of risers 232 into a respective one of the plurality of electrochemical cell repeating units 210.

As shown in the exemplary electrochemical assembly 200 depicted in FIG. 2, the first feed stream 236 flows through an inlet riser 232a and across an underside 254 of the substrate 220, via the flow channels such as flow channels 120 shown in FIG. 1 on the interconnect 222, and is exhausted from the respective one of the plurality of electrochemical cell repeating units 210 into an outlet riser 232b of the plurality of risers 232. The second feed stream 238 flows through an inlet riser 232c and across the top side 256 of the substrate 220, via the flow channels such as flow channels 120 shown in FIG. 1 on the interconnect 222, and is exhausted from the respective one of the plurality of electrochemical cell repeating units 210 into an outlet riser 232d of the plurality of risers 232. In some embodiments, during operation, the first feed 236 flows across a top side 256 of the substrate 220 via the flow channels such as flow channels 120 shown in FIG. 1 on the interconnect 222, and the second feed stream 238 flows across an underside 254 of the substrate 220 via the flow channels 120 such as flow channels 120 shown in FIG. 1.

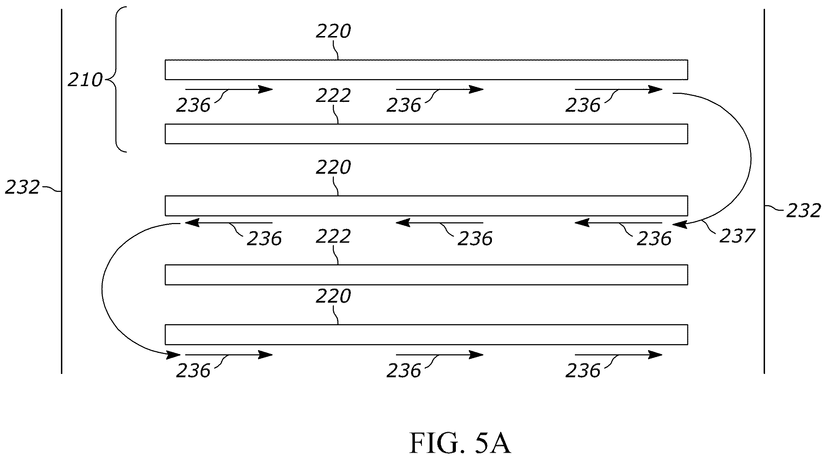

Referring to FIG. 5A, an exploded cross-section view taken along the line I of FIG. 2 is shown. In the exemplary embodiment shown FIG. 5A, the exhausted first feed stream 236 exiting the flow field (represented by arrows 236) of a respective on of the plurality of electrochemical cell repeating units 210 flows through a respective riser 232 and enters (represented by arrows 237) a flow field (represented by arrows 236) of a subsequent one of the plurality of electrochemical cell units 210 stacked upstream or downstream creating a series of flows of the first feed stream 236 throughout the electrochemical assembly 200. In this manner, unreacted reactants may be circulated through the plurality of electrochemical cell units 210. In some embodiments, the exhausted first feed stream 236 enters and flows through a respective riser 232 to the at least two ports 212 as shown in FIG. 2.

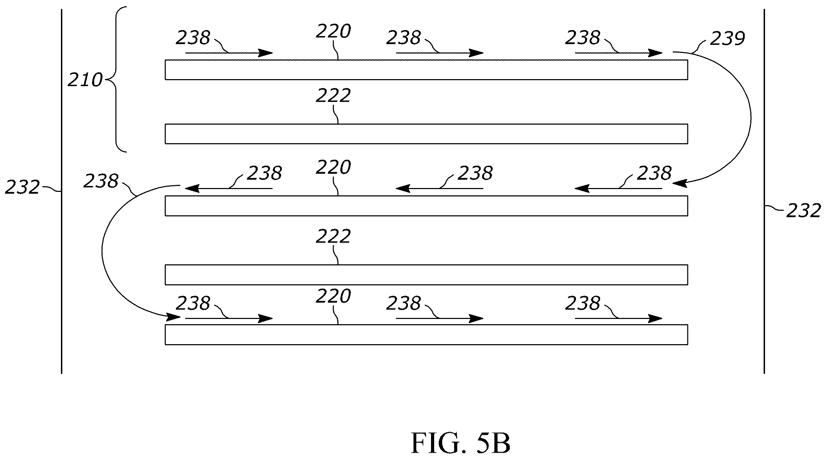

Referring to FIG. 5B, an exploded cross-section view taken along the line II of FIG. 2 is shown. In the exemplary embodiment shown in FIG. 5B, the exhausted the exhausted second feed stream 238 exiting the flow field (represented by arrows 238) of a respective one of the plurality of electrochemical cell repeating units 210 flows through a respective riser 232 and enters (represented by arrows 239) a flow field (represented by arrows 238) of a subsequent one of the plurality of electrochemical cell units 210 stacked upstream or downstream creating a series of flows of the second feed stream 238 throughout the electrochemical assembly 200. In some embodiments, the exhausted second feed stream 238 enters and flows through a respective riser 232 to the at least two ports 212 as shown in FIG. 2.

The exhausted first feed stream 236 as shown in FIG. 5A and second feed stream 238 as shown in FIG. 5B may flow through an adjacent one of the plurality of electrochemical cell repeating units 210 or may bypass the adjacent one of the plurality of electrochemical cell repeating units 210 and may flow through a respective one of the plurality of electrochemical cell repeating units 210 secondly adjacent, or the next-nearest neighbor of the adjacent one of the plurality of electrochemical cell repeating units 210.

Referring back to FIG. 2, in some embodiments, the flow direction of the first feed stream 236 and second feed stream 238 in the plurality of risers 232 is the same. For example, the first feed stream 236 and second feed stream 238 may flow from the first gas manifold plate 202 at the first end 204 to the second gas manifold plate 206 at the second end 208. In some embodiments, the flow direction of the first feed stream 236 and second feed stream 238 in the plurality of risers 232 may be opposite to each other. As used herein, "flow direction" refers to the axial direction or fluid path of the first feed stream 236 and the second feed stream 238 through the plurality of risers 232.

The electrochemical assembly 200 may operate at high temperatures due to the conductance characteristics of the electrolyte layer such as electrolyte layer 116b shown in FIG. 1 of the plurality of sub cells 226. Thus, during operation, the electrochemical assembly 200 may generate by-product heat that needs to be removed to avoid overheating, thermal degradation, and accumulation of stresses in the electrochemical assembly 200. As described above, the first feed stream 236 and the second feed stream 238 may respectively flow through the one or more neighboring plurality of electrochemical cell repeating units 210. In this way, the by-product heat of the respective downstream plurality of electrochemical cell repeating units 210 is used to preheat the first feed stream 236 and the second feed stream 238 subsequently flowing through a respective upstream one of the plurality of electrochemical cell repeating units 210 to improve heat dissipation and provide sufficient cooling to reduce a temperature gradient formed between the plurality of electrochemical cell repeating units 210. As such, the structural integrity and operational reliability may be increased. Additionally, the flow field design recycles and utilizes the by-product heat to maintain the first feed stream 236 and the second feed stream 238 at optimal temperatures for improved electrochemical reaction rates. In this manner, the amount of external energy required to heat and maintain the internal operating temperature of the electrochemical assembly 200 may be reduced.

Referring still to FIG. 2, the flow field design further improves feed utilization with integrated recirculation. During operation, the recirculation process begins with internal reforming of the first feed stream 236 flowing across the substrate 220 of the plurality of electrochemical cell repeating units 210. For example, in the case of an integrated recirculation, methane (CH₄) is fed into electrochemical assembly 200 in the first feed stream 236. Steam (H₂O) may be co-fed with the methane (CH₄) in the first feed stream 236 to prevent coke formation. During operation, internal reforming of methane (CH₄) with steam (H₂O) will occur in the plurality of electrochemical cell repeating units 210 to produce Hydrogen (H₂) and carbon monoxide (CO). The produced Hydrogen (H₂) and carbon monoxide (CO) will be oxidized to water (H₂O) and carbon dioxide (CO₂) electrochemically in the exhaust stream 236 and mixed in the plurality of risers 232 with the unreacted methane (CH₄) and unused hydrogen (H₂) and carbon monoxide (CO). A fresh stream of methane (CH4) is introduced through the plurality of risers 232 and mixed with the water (H₂O) and carbon dioxide (CO₂) in the exhaust stream 236. The water (H₂O) and carbon dioxide (CO₂) in the exhaust stream 236 may be directly used for methane internal reforming, which could reduce the amount of water that is required for methane reforming and simplify the recirculation process.

The flow field design distributes the methane (CH₄) and water (H₂O) to the anode layer (such as anode layer 116A shown in FIG. 1) formed on the substrate 220 of one of the plurality of electrochemical cell repeating units 210. The anode layer (such as anode layer 116A shown in FIG. 1) facilitates the reforming reactions at high temperatures (e.g., 600C-1000C) to carbon monoxide (CO) and hydrogen (H₂). The hydrogen (H₂) is electrochemically oxidized at the anode (such as anode layer 116A shown in FIG. 1) generating water (H₂O) and the carbon monoxide (CO) reacts with the oxygen ions (O²⁻) to form carbon dioxide (CO₂). Concurrently, the oxygen from the second feed stream 238 is reduced at the cathode layer (such as cathode layer 116C shown in FIG. 1) formed on the substrate 220. The oxygen ions migrate through the electrolyte layer (such as electrolyte layer 116B shown in FIG. 1) to the anode layer (such as anode layer 116A shown in FIG. 1) to participate in the oxidation of hydrogen (H₂).

As described above, the manufacturing methods used to fabricate the plurality of electrochemical cell repeating units 210 provide the ability to design local flow-redistributing features around each sub cell to improve uniform distribution of reactants and heat. In some cases, however, part of the first exhaust stream (i.e., the reacted first feed stream 236) may contain unreacted methane (CH₄) and hydrogen (H₂). Thus, the flow field design, in one embodiment, recycles the unreacted methane (CH₄) and hydrogen (H₂) back to the plurality of electrochemical cell repeating units 210.

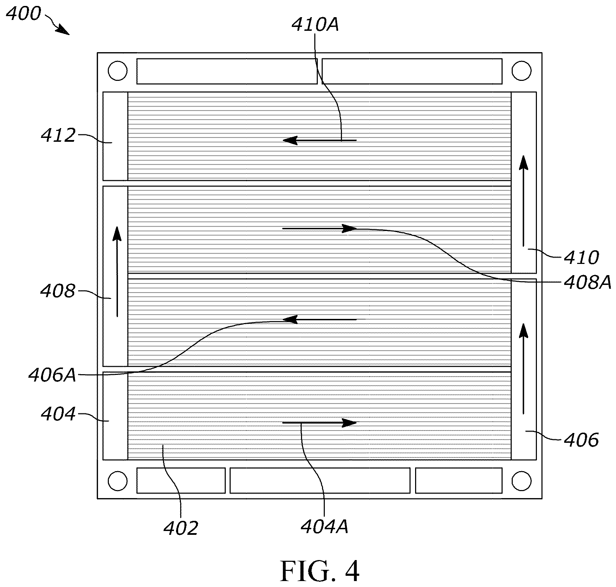

In some embodiments, the flow field design recycles the first exhaust stream 236 containing the unreacted methane (CH₄) and hydrogen (H₂) back to the same respective one of the plurality of electrochemical cell repeating units 210. Referring particularly to FIG. 4, an interconnect 400 with a plurality of flow channels 402 is shown. The flow field design transfers the first feed stream 404A through an inlet riser 404. The electrochemical reactions occur as the plurality of flow channels 402 facilitate the first feed stream 404A flow across an underside (i.e., 256 as shown in FIG. 1) of the substrate (i.e., 220 as shown in FIG. 1). The first exhaust stream 404A containing the unreacted reactants is recycled back to the plurality of flow channels 402 through the outlet riser 406. The outlet riser 406 serves as a U-turn passage for the first exhausted stream 406A facilitating the counterflow or reverse flow direction in each group of the plurality of flow channels 402. The exhausted stream 406A then flows in an opposite direction across the plurality of flow channels 402 to a second outlet riser 408 which serves as a U-turn passage for the exhausted stream 408A. The exhausted stream 408A then flows across the plurality of flow channels 402 is recycled through outlet riser 410 and flows across the plurality of flow channels 402 to outlet riser 412. The first exhausted stream 410A may then be recycled into an adjacent or secondly adjacent one of the plurality of repeating electrochemical cell units 210 or exhausted from one of the plurality of ports 212 on either the first gas manifold plate 202or the second gas manifold plate 206 as shown in FIG. 2.

Referring back to FIG. 2, in the case of an integrated recirculation, after the internal reforming of methane, the first exhaust stream 236 and the second exhaust stream 238 are exhausted from the electrochemical assembly 200. The integrated recirculation improves the feed stream utilization and improves the overall system energy efficiency.

In some embodiments, one or more fresh feed streams 260 of methane (CH₄) are input into the electrochemical assembly 200 during operation through the ports 212. The one or more fresh feed streams 260 of methane (CH₄) may be reformed by the water (H₂O) and carbon dioxide (CO₂) during the integrated recirculation process to form carbon monoxide (CO) and hydrogen (H₂) during operation of the electrochemical assembly 200.

In some embodiments, the first feed stream 236 or the second feed stream 238 may be preheated prior to flowing through the at least one port 212 on the first gas manifold plate 202 or the second gas manifold plate 206. For example, the first feed stream 236 may be preheated to a temperature close to the electrochemical assembly 200 operating temperature for improved heat transfer and electrochemical reaction rates.

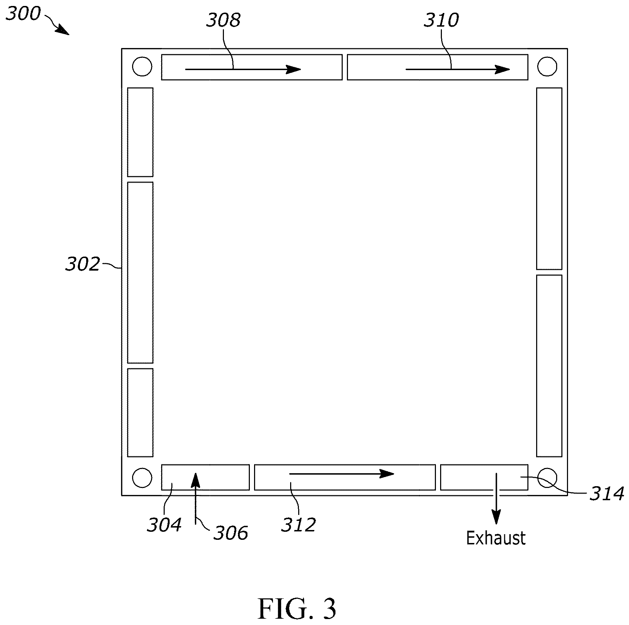

Next referring to FIG. 3, a gas manifold plate 300 is shown. A plurality of inlet riser holes 304, 308, 310, 312 and an outlet riser hole 314 are formed around an outer perimeter 302 of the gas manifold plate 300. The plurality of inlet riser holes 304, 308, 310, 312 introduce a feed stream 306 in the electrochemical assembly (as shown in FIG. 2) and the outlet riser hole 314 removes an exhaust stream 316 from the electrochemical assembly (as shown in FIG. 2). The multi-feed inputs of the gas manifold plate 300 provide a more uniform distribution of the feed stream 306 (i.e., the reforming agent) across the electrochemical assembly 200. This uniformity may increase the efficiency of the reforming process, reducing the overall amount of feed stream (i.e., reforming agent) needed. Additionally, the multi-feed inputs can improve feed stream utilization, energy efficiency, and reduce a temperature gradient and pressure drop across the electrochemical assembly 200.

Further aspects of the disclosure are provided by the subject matter of the following clauses:
An electrochemical cell unit comprising: a substrate including a plurality of porous regions; a plurality of riser holes formed on the substrate, the plurality of riser holes including at least two inlet riser holes and at least two outlet riser holes; a plurality of sub cells disposed on the substrate such that the plurality of sub cells cover the plurality of porous regions, each sub cell of plurality of sub cells including an anode layer, a cathode layer, and an electrolyte layer disposed between the anode layer and cathode layer; and an interconnect connected to the substrate, the interconnect including a top side, an underside and a plurality of flow channels disposed on both sides of the interconnect and a plurality of riser holes formed on the interconnect, the plurality of riser holes including at least two inlet riser holes and at least two outlet riser holes; wherein the plurality of riser holes of the substrate are aligned and in fluid communication with the plurality of riser holes of the interconnect for distributed flow of a first feed stream and a second feed stream to the substrate, and wherein the plurality of flow channels on the interconnect are configured to distribute a flow of the first feed stream and the second feed stream over the plurality of sub cells on the substrate.

The electrochemical cell unit of any preceding clause, wherein the substrate comprises a metal sheet having an area in the range from about 100cm² to about 3000cm².

The electrochemical cell unit of any preceding clause, wherein the anode layer, the cathode layer, and the electrolyte layer of the plurality of sub cells continuously cover the plurality of porous regions.

The electrochemical cell unit of any preceding clause, wherein the anode layer, the cathode layer, and the electrolyte layer of each sub cell of the plurality of sub cells covers an individual porous region of the plurality of porous regions.

The electrochemical cell unit of any preceding clause, wherein the plurality of porous regions is formed in an array arrangement on the substrate with a plurality of rows of porous regions in a first direction and a plurality of columns of porous regions in a second direction orthogonal to the first direction.

The electrochemical cell unit of any preceding clause, wherein the plurality of riser holes is formed around an outer perimeter of substrate and wherein each row of the plurality of rows of porous regions is fluidly connected to an inlet riser hole and an outlet riser hole.

An electrochemical assembly comprising: a first gas manifold plate defining a first end; a second gas manifold plate spaced apart from the first gas manifold plate and defining a second end; a plurality of electrochemical cell repeating units disposed between the first gas manifold plate and the second gas manifold plate, each electrochemical cell repeating unit including a substrate with a plurality of sub cells and an interconnect connected to the substrate, each sub cell including an anode layer, a cathode layer, and an electrolyte layer disposed between the anode layer and cathode layer; a plurality of risers integrally formed around an outer perimeter of each substrate and interconnect of each electrochemical cell repeating unit, the plurality of risers including at least two inlet risers and at least two outlet risers in fluid communication with the electrochemical cell repeating units.

The electrochemical assembly of any preceding clause, wherein the electrochemical cell repeating units are stacked axially such that the plurality of risers extend substantially axially through the electrochemical assembly.

The electrochemical assembly of any preceding clause, wherein the first gas manifold plate and the second gas manifold plate each include at least two ports fluidly connected to the plurality of risers configured to introduce a first feed stream and/or a second feed stream into the plurality of risers or remove a first product stream and/or a second product stream from the plurality of risers.

The electrochemical assembly of any preceding clause, wherein the first gas manifold plate includes a first port configured to introduce the first feed stream and a second port configured to remove the first product stream.

The electrochemical assembly of any preceding clause, wherein the substrate comprises: a metal sheet substate and isolated porous metal structures on metal sheet substate, and wherein the plurality of sub cells are disposed on the isolated porous metal structures.

The electrochemical assembly of any preceding clause, wherein a flow direction of the first feed stream and the second feed stream between the first gas manifold plate and the second gas manifold plate in plurality of risers is the same.

The electrochemical assembly of any preceding clause, wherein a flow direction of the first feed stream and the second feed stream between the first gas manifold plate and the second gas manifold plate in the at least two inlet risers of the plurality of risers is opposite a flow direction in the at least two outlet risers of the plurality of risers.

The electrochemical assembly of any preceding clause, wherein the risers are configured to recirculate unreacted reactants in the first feed stream through the plurality of electrochemical cell repeating units.

An electrochemical device comprising: a metal sheet substrate; isolated porous metal structures disposed on the substrate; an anode layer disposed on the isolated porous metal structures; an electrolyte layer disposed on the anode layer; a cathode layer disposed on the electrolyte layer; and a flow field design comprising a plurality of risers disposed on the metal sheet substrate, the plurality of risers including at least two inlet risers and at least two outlet risers in fluid communication with the isolated porous metal structures.

The electrochemical device of any preceding clause, further comprising an interconnect connected to the metal sheet substrate, the interconnect having a top side and an underside and including a plurality of flow channels disposed on each side of the interconnect and a plurality of riser holes formed on the interconnect, the plurality of riser holes including at least two inlet riser holes and at least two outlet riser holes in fluid communication with the flow channels.

The electrochemical device of any preceding clause, wherein the at least two inlet riser holes and the at least two outlet riser holes are aligned respectively with the inlet risers and the outlet risers of the metal sheet substrate.

The electrochemical device of any preceding clause, wherein the flow field design transfers a first feed stream from a first inlet riser of the at least two inlet risers of the metal sheet substrate through the plurality of flow channels of the interconnect such that the first feed stream flows laterally across the metal sheet substrate to the anode layer, and the flow field design transfers a first product stream from the metal sheet substrate through the plurality of flow channels on the interconnect into a first outlet riser of the at least two outlet risers, and wherein the flow field design transfers a second feed stream from a second inlet riser of the at least two inlet risers to the metal sheet substrate though the plurality of flow channels on the interconnect such that the second feed stream flows laterally across the metal sheet substrate to the cathode layer, and the flow field design transfers a second product stream from the metal sheet substrate through the plurality of flow channels on the interconnect into a second outlet riser of the at least two outlet risers.

The electrochemical device of any preceding clause, wherein the flow field design recirculates a portion of the first product stream and/or the second product stream back to the metal sheet substrate.

The electrochemical device of any preceding clause, wherein the metal sheet substrate comprises a metal sheet having an area in the range from about 100cm² to about 3000cm².

## Claims

1. An electrochemical cell unit (100) comprising:
a substrate (102) including a plurality of porous regions (104);
a plurality of riser holes (108d) (108c) (108b) (108a) formed on the substrate (102), the plurality of riser holes (108d) (108c) (108b) (108a) including at least two inlet riser holes (108a)(108c) and at least two outlet riser holes (108b)(108c);
a plurality of sub cells (116) disposed on the substrate (102) such that the plurality of sub cells (116) cover the plurality of porous regions (104), each sub cell of plurality of sub cells (116) including an anode layer (116A), a cathode layer (116C), and an electrolyte layer (116B) disposed between the anode layer (116A) and cathode layer (116C); and
an interconnect (118) connected to the substrate (102), the interconnect (118) including a top side (126), an underside (128) and a plurality of flow channels (120) disposed on both sides of the interconnect (118) and a plurality of riser holes (122d) (122c) (122b) (122a) formed on the interconnect (118), the plurality of riser holes (122d) (122c) (122b) (122a) including at least two inlet riser holes (122a)(122c) and at least two outlet riser holes (122b)(122c);
wherein the plurality of riser holes (108d) (108c) (108b) (108a) of the substrate (102) are aligned and in fluid communication with the plurality of riser holes (122d) (122c) (122b) (122a) of the interconnect (118) for distributed flow of a first feed stream (130) and a second feed stream (132) to the substrate (102), and
wherein the plurality of flow channels (120) on the interconnect (118) are configured to distribute a flow of the first feed stream (130) and the second feed stream (132) over the plurality of sub cells (116) on the substrate (102).

2. The electrochemical cell unit of claim 1, wherein the substrate (102) comprises a metal sheet having an area in the range from about 100cm² to about 3000cm².

3. The electrochemical cell unit of any of claims 1 or 2, wherein the anode layer (116A), the cathode layer (116C), and the electrolyte layer (116B) of the plurality of sub cells (116) continuously cover the plurality of porous regions (104).

4. The electrochemical cell unit of any of claims 1 or 2, wherein the anode layer (116A), the cathode layer (116C), and the electrolyte layer (116B) of each sub cell of the plurality of sub cells (116) covers an individual porous region of the plurality of porous regions (104).

5. The electrochemical cell unit (100) of any preceding claim, wherein the plurality of porous regions (104) is formed in an array arrangement on the substrate (234) (220) (102) with a plurality of rows of porous regions in a first direction and a plurality of columns of porous regions in a second direction orthogonal to the first direction.

6. The electrochemical cell unit (100) of any preceding claim, wherein the plurality of riser holes (230) (122d) (122c) (122b) (122a) (108d) (108c) (108b) (108a) is formed around an outer perimeter (302) (124) of substrate (234) (220) (102) and wherein each row of the plurality of rows of porous regions is fluidly connected to an inlet riser (404) (232c) (232a) hole and an outlet riser (412) (410) (406) (232d) (232b) hole (314).

7. An electrochemical assembly comprising:
a first gas manifold plate (202) defining a first end (204);
a second gas manifold plate (206) spaced apart from the first gas manifold plate (202) and defining a second end (208);
a plurality of the electrochemical cell units (100) of claim 1 disposed between the first gas manifold plate (202) and the second gas manifold plate (206); and
a plurality of risers (232) integrally formed around an outer perimeter of each substrate (220) and interconnect (222) of each electrochemical cell repeating unit (210), the plurality of risers (232) including at least two inlet risers and at least two outlet risers in fluid communication with the electrochemical cell units (100).

8. The electrochemical assembly of claim 7, wherein the electrochemical cell units (100) are stacked axially such that the plurality of risers (232) extend substantially axially through the electrochemical assembly (200).

9. The electrochemical assembly of any of claims 7 or 8, wherein the first gas manifold plate (202) and the second gas manifold plate (206) each include at least two ports (212) fluidly connected to the plurality of risers (232) configured to introduce a first feed stream (236) and/or a second feed stream (238) into the plurality of risers (232) or remove a first product stream (248) and/or a second product stream (252) from the plurality of risers (232).

10. The electrochemical assembly of any of claims 7 to 9, wherein the substrate (220) comprises:
a metal sheet substate and isolated porous metal structures (104) on metal sheet substate, and
wherein the plurality of sub cells (226) are disposed on the isolated porous metal structures (224).

11. The electrochemical assembly of claim 9, wherein a flow direction of the first feed stream (236) and the second feed stream (238) between the first gas manifold plate (202) and the second gas manifold plate (206) in plurality of risers (232) is the same.

12. The electrochemical assembly of claim 9, wherein a flow direction of the first feed stream (236) and the second feed stream (238) between the first gas manifold plate (202) and the second gas manifold plate (206) in the at least two inlet risers of the plurality of risers (232) is opposite a flow direction in the at least two outlet risers of the plurality of risers (232).

13. The electrochemical assembly of claim 9, wherein the substrate (234) (220) (102) comprises:
a metal sheet substate and isolated porous metal structures on metal sheet substate, and
wherein the plurality of sub cells (226) (116) are disposed on the isolated porous metal structures.

14. The electrochemical assembly of claim 13, wherein a flow direction of the first feed stream (306) (404A) (236) (130) and the second feed stream (306) (238) (132) between the first gas manifold plate (300) (202or) (202) and the second gas manifold plate (300) (206) in plurality of risers (232) is the same.

15. The electrochemical cell unit of any of claims 1 to 6, wherein the substrate is at least one of a stainless steel alloy or a nickel-based alloy.
